# EUROPEAN PATENT APPLICATION

(11) **EP 4 744 774 A1**
(43) Date of publication of application: **20.05.2026**
(21) Application number: 23949410.7
(22) Date of filing: 23.08.2023
(51) Int. Cl.: B01L 3/02, G01N 35/10

(54) **LIQUID TRANSFER DEVICE, REACTION DEVICE AND ANALYSIS DEVICE**

(71) Applicant: BGI Research Shenzhen, Yantian District Shenzhen, Guangdong 518083 (CN); BGI Shenzhen Co., Ltd, Shenzhen, Guangdong 518083 (CN)
(72) Inventor: XU, Xun, Shenzhen, Guangdong 518083 (CN); SHEN, Mengzhe, Shenzhen, Guangdong 518083 (CN); MENG, Zongfa, Shenzhen, Guangdong 518083 (CN); CHEN, Kaijian, Shenzhen, Guangdong 518083 (CN); QIN, Yanzhe, Shenzhen, Guangdong 518083 (CN); LUO, Jie, Shenzhen, Guangdong 518083 (CN); WANG, Fei, Shenzhen, Guangdong 518083 (CN); YU, Shiqiang, Shenzhen, Guangdong 518083 (CN); CHU, Haiyang, Shenzhen, Guangdong 518083 (CN); LI, Yuxiang, Shenzhen, Guangdong 518083 (CN); ZHANG, Wenwei, Shenzhen, Guangdong 518083 (CN)
(74) Representative: Ashton, Gareth Mark
(86) International application number: PCT/CN2023/114458
(87) International publication number: WO 2025/039222

(57) **Abstract**

Disclosed in the present invention are a liquid transfer device, a reaction device and an analysis device, the liquid transfer device being used for guiding a reaction liquid to a reaction surface of a sample carrier. A fixing portion comprises a fixing structure, the fixing structure being used for fixing a sample carrier. A first substrate comprises a first wall surface, the first substrate having a first position and a second position which are relative to the fixing portion. When the first substrate is located at the first position, the first wall surface is used for obtaining a reaction liquid, and when the first substrate is located at the second position, the first wall surface is used for guiding the reaction liquid to a reaction surface. A first driving portion is configured to drive the first substrate to perform position switching between the first position and the second position. The Mohs hardness of the first substrate is greater than or equal to 5H. The present invention can effectively control the distance between the first wall surface and the reaction surface of the sample carrier, thereby ensuring the quality of reaction liquid transfer, and avoiding damage to the reaction surface caused when the first wall surface is in contact with the reaction surface, or failure to completely transfer the reaction liquid to the reaction surface caused by an excessively large distance between the first wall surface and the reaction surface.

## Description

### TECHNICALFIELD

The present disclosure relates to the technical field of biochemical reaction, and in particular, to a liquid transfer device, a reaction device, and an analysis device.

### BACKGROUND

Gene sequencing can obtain the sequence of target gene fragments, facilitating further molecular biology research and genetic engineering. It can be used to study various diseases and gene expressions, and is of great significance in numerous fields including biology, medicine, and environmental science.

Currently, mainstream high-throughput sequencing technologies are based on the principle of Sequencing-By-Synthesis (SBS). DNA nanoballs are formed within the prepared library to amplify fluorescent signals. The nanoballs are affixed to an arrayed sequencing chip according to a specific arrangement rule and spacing. Through the reaction with specific enzymes and fluorescent probes in each cycle, different bases emit fluorescent signals with different wavelengths, which are collected by an imaging system of the sequencing instrument. Finally, image reconstruction and recognition are carried out to sequentially obtain the base sequence for each cycle.

Existing high-throughput sequencing technologies widely employ flow cells to implement the sequencing process. Multiple cycles of imaging are performed on the biological sample loaded on the planar medium in the flow cell to identify bases. However, the biochemical reactions between the imaging processes require precise temperature and fluid control, with stringent environmental requirements. In addition, each cycle requires complete replacement of the previous reagent, requiring a significant amount of the next reagent for flushing before the reaction can proceed, resulting in high reagent consumption. The sequencing process requires multiple reagents to undergo up to hundreds of "reaction-imaging" cycles, resulting in low sequencing efficiency and high production costs.

In the related art, to reduce the costs and improve the throughput, a liquid transfer device is used to implement the transfer of liquid. A thin layer of reagent is applied to the surface of a film substrate. Then, the film substrate carrying the thin layer of reagent is driven to move toward a sample carrier. The film substrate passes over the sample carrier and transfers the thin layer of reagent onto the sample carrier, thus achieving liquid transfer. However, because the film substrate is a flexible material, the film substrate carrying the thin layer of reagent may undergo vibration during its movement towards the sample carrier. This results in a risk of scraping or scratching against the sample carrier, which adversely affects the stability of liquid transfer.

### SUMMARY

A main objective of the present disclosure is to provide a liquid transfer device, a reaction device, and an analysis device, to effectively control a distance between a first wall surface and a reaction surface of a sample carrier.

To achieve the foregoing objective, the present disclosure provides a liquid transfer device, including a fixing part, a first substrate, and a first driving part.

The fixing part includes a fixing structure, where the fixing structure is configured to fix a sample carrier.

The first substrate includes a first wall surface, where the first substrate has a first position and a second position that are relative to the fixing part, the first wall surface is configured to obtain a reaction solution when the first substrate is located at the first position, and the first wall surface is configured to direct the reaction solution to a reaction surface when the first substrate is located at the second position.

The first driving part is configured to drive the first substrate to perform position switching between the first position and the second position,
where Mohs hardness of the first substrate is greater than or equal to 5H.

In some embodiments, the first wall surface is planar and parallel to the reaction surface, and the first driving part is configured to drive the first substrate to translate in a direction parallel to the first wall surface, to cause the first substrate to perform position switching between the first position and the second position;
or
the first wall surface is planar and parallel to the reaction surface, and the first driving part is configured to drive the first substrate to rotate about an axis perpendicular to the first wall surface, to cause the first substrate to perform position switching between the first position and the second position;
   or
the first wall surface is a cylindrical surface, a central axis of the cylindrical surface is parallel to the reaction surface, and the first driving part is configured to drive the first substrate to rotate about the central axis, to cause the first substrate to perform position switching between the first position and the second position.

In some embodiments, the liquid transfer device further includes a liquid distribution part and a cleaning part, the liquid distribution part is configured to distribute the reaction solution onto the first wall surface when the first substrate is located at the first position, and the cleaning part is configured to clean the first wall surface after the first substrate has transferred the reaction solution to the reaction surface at the second position and moved to the first position;
or
the first substrate further has a third position relative to the fixing part, the first driving part is configured to drive the first substrate to switch between the second position and the third position, the liquid transfer device includes a liquid distribution part and a cleaning part, the liquid distribution part is configured to distribute the reaction solution onto the first wall surface when the first substrate is located at the first position, and the cleaning part is configured to clean the first wall surface when the first substrate is located at the third position.

In some embodiments, the liquid transfer device further includes a second substrate, the second substrate includes a second wall surface, the second substrate has a fourth position and a fifth position that are relative to the fixing part, the second wall surface is configured to obtain the reaction solution when the second substrate is located at the fourth position, and the second wall surface is configured to direct the reaction solution to the reaction surface when the second substrate is located at the fifth position, where Mohs hardness of the second substrate is greater than or equal to 5H; and
the first driving part is configured to drive the second substrate to perform position switching between the fourth position and the fifth position; or the liquid transfer device further includes a second driving part, where the second driving part is configured to drive the second substrate to perform position switching between the fourth position and the fifth position.

**In** some embodiments, the first driving part is configured to simultaneously drive the first substrate to the first position and drive the second substrate to the fifth position at which the second substrate is spaced apart from and opposite to the fixing structure, and simultaneously drive the first substrate to the second position at which the first substrate is spaced apart from and opposite to the fixing structure and drive the second substrate to the fourth position;
or
the first driving part is configured to simultaneously drive the first substrate to the first position and drive the second substrate to the fourth position, and simultaneously drive the first substrate to the second position and drive the second substrate to the fifth position; and the liquid transfer device further includes a third driving part, where the third driving part is connected to the fixing part, the third driving part drives the fixing part to perform position switching between a sixth position where the fixing structure is arranged spaced apart from and opposite to the first wall surface of the first substrate located at the second position and a seventh position where the fixing structure is arranged spaced apart from and opposite to the second wall surface of the second substrate located at the fifth position.

In some embodiments, the first substrate is arranged spaced apart from and opposite to the second substrate in a first direction, and the first driving part is configured to drive the first substrate and the second substrate to reciprocate in the first direction, such that the first driving part simultaneously drives the first substrate to the first position and drives the second substrate to the fifth position at which the second substrate is spaced apart from and opposite to the fixing structure, and simultaneously drives the first substrate to the second position at which the first substrate is spaced apart from and opposite to the fixing structure and drives the second substrate to the fourth position;
or
the first substrate is spaced apart from and opposite to the second substrate in a second direction, and the first driving part is configured to drive the first substrate and the second substrate to reciprocate in a first direction perpendicular to the second direction, such that the first driving part simultaneously drives the first substrate to the first position and drives the second substrate to the fourth position, and simultaneously drives the first substrate to the second position and drives the second substrate to the fifth position; and the liquid transfer device further includes a third driving part, where the third driving part is connected to the fixing part and drives the fixing part to perform position switching between a sixth position where the fixing structure is arranged spaced apart from and opposite to the first wall surface of the first substrate located at the second position and a seventh position where the fixing structure is arranged spaced apart from and opposite to the second wall surface of the second substrate located at the fifth position.

In some embodiments, the first wall surface is planar and parallel to the reaction surface, and the first driving part is configured to drive the first substrate to rotate about an axis perpendicular to the first wall surface, to cause the first substrate to perform position switching between the first position and the second position; and the axis passes through the first wall surface; and
the first wall surface includes a first region and a second region, the first region and the second region are distributed in a circumferential direction of the axis, the first region is configured to obtain the reaction solution when the first substrate is located at the first position, and the first region is configured to transfer the obtained reaction solution to the reaction surface when the first substrate is located at the second position.

In some embodiments, the first wall surface further includes a third region, and the first region, the second region, and the third region are sequentially arranged in a rotation direction of the first substrate;
the first substrate further includes a third position, and in the rotation direction of the first substrate, the first driving part drives the first substrate to perform cyclic rotation in a sequence of rotating from the first position to the second position, rotating from the second position to the third position, and rotating from the third position to the first position; and
the liquid transfer device includes a liquid distribution part and a cleaning part; and in a process in which the first substrate is sequentially located at the first position, the second position, and the third position, the first region, the third region, and the second region sequentially obtain the reaction solution from the liquid distribution part, the second region, the first region, and the third region sequentially transfer the reaction solution to the reaction surface, and the third region, the second region, and the first region are sequentially cleaned by the cleaning part.

In some embodiments, the first wall surface is planar and parallel to the reaction surface, and the first driving part is configured to drive the first substrate to rotate about an axis perpendicular to the first wall surface, to cause the first substrate to perform position switching between the first position and the second position; and the axis passes through the first wall surface;
the liquid transfer device further includes a second substrate, the second substrate includes a second wall surface, the second wall surface is annular and arranged surrounding an outer side of the first wall surface, the first driving part is configured to drive the second wall surface to rotate about the axis, to cause the second substrate to perform position switching between a fourth position and a fifth position, the second wall surface is configured to obtain the reaction solution when the second substrate is located at the fourth position, and the second wall surface transfers the reaction solution to the reaction surface when the second substrate is located at the fifth position, where Mohs hardness of the second substrate is greater than or equal to 5H; and
the liquid transfer device further includes a third driving part, where the third driving part is connected to the fixing part and capable of driving the fixing part to perform position switching between a sixth position and a seventh position in a direction perpendicular to the axis, the fixing structure is spaced apart from and opposite to the first wall surface when the fixing part is located at the sixth position, and the fixing structure is spaced apart from and opposite to the second wall surface when the fixing part is located at the seventh position.

In some embodiments, the first substrate is made of glass or ceramic; or the first wall surface is subjected to plasma/corona treatment, to increase surface tension of the first wall surface; or a distance between the first wall surface located at the second position and the reaction surface is twice a thickness of the reaction solution.

In some embodiments, the liquid transfer device satisfies one of the following conditions (a) to (f):
(a) Flatness P of the first substrate satisfies: 0 um≤P≤3 um.
(b) Both the first wall surface and the reaction surface are planar, the first wall surface is parallel to the reaction surface, the first substrate is capable of rotating about an axis perpendicular to the first wall surface, and an area of the first wall surface is not less than twice an area of the reaction surface.
(c) The first driving part drives the first substrate to move to the second position in a third direction, in a direction parallel to the first wall surface, a cross section of the first substrate has a first cross-sectional side edge parallel to the third direction, and in the third direction, a length of the first cross-sectional side edge is greater than twice a length of the reaction surface.
(d) The first driving part drives the first substrate to move to the second position in a third direction, in a direction parallel to the first wall surface, a cross section of the first substrate has a second cross-sectional side edge perpendicular to the third direction, and in a direction perpendicular to the third direction, a length of the second cross-sectional side edge is greater than a length of the reaction surface.
(e) The liquid transfer device further includes a liquid distribution part and a cleaning part, where the liquid distribution part is configured to distribute the reaction solution onto the first wall surface when the first substrate is located at the first position, and the cleaning part is configured to clean the first wall surface after the first substrate has transferred the reaction solution to the reaction surface at the second position, where

the first driving part is configured to drive the first substrate to move in a first direction, and the cleaning part, the liquid distribution part, the first substrate, and the fixing part are arranged spaced apart from and opposite to each other in the first direction,
and/or
the first driving part is configured to drive the first substrate to rotate about an axis perpendicular to the first wall surface, and the cleaning part, the liquid distribution part, and the fixing part are distributed in a circumferential direction of the axis; or
(f) The first driving part is configured to drive the first substrate to move in a first direction, the liquid transfer device further includes a liquid distribution part, where the liquid distribution part is configured to distribute the reaction solution onto the first wall surface when the first substrate is located at the first position, and the cleaning part is configured to clean the first wall surface after the first substrate has transferred the reaction solution to the reaction surface at the second position, where
when the first substrate is located at the first position, the first substrate and the liquid distribution part are arranged opposite to each other in a second direction perpendicular to the first direction, and when the first substrate is located at the second position, the first substrate and the fixing part are arranged opposite to each other in the second direction.

An embodiment of a second aspect of the present disclosure provides a liquid transfer device, configured to direct a reaction solution to a reaction surface of a sample carrier. The liquid transfer device includes a fixing part, a first substrate, and a first driving part.

The fixing part includes a fixing structure, where the fixing structure is configured to fix the sample carrier, and the fixing part has a first position and a second position that are relative to the fixing part.

The first substrate includes a first wall surface, where the first wall surface is configured to obtain the reaction solution when the fixing part is located at the first position, and the first wall surface is configured to direct the reaction solution to the reaction surface when the fixing part is located at the second position; and
the first driving part is configured to drive the fixing part to perform position switching between the first position and the second position,
where Mohs hardness of the first substrate is greater than or equal to 5H.

An embodiment of a third aspect of the present disclosure provides a reaction device, including the liquid transfer device and the sample carrier in any one of the foregoing embodiments.

An embodiment of a fourth aspect of the present disclosure provides an analysis device, including the reaction device in any one of the foregoing embodiments.

Compared to the existing technologies, the present disclosure has beneficial effects as follows.

In the technical schemes of the present disclosure, the liquid transfer device includes the fixing part, the first substrate, and the first driving part. The fixing part includes the fixing structure, where the fixing structure is configured to fix the sample carrier. The first substrate includes the first wall surface, where the first substrate has the first position and the second position that are relative to the fixing part, the first wall surface is configured to obtain the reaction solution when the first substrate is located at the first position, and the first wall surface is configured to direct the reaction solution to the reaction surface when the first substrate is located at the second position. The first driving part is configured to drive the first substrate to perform position switching between the first position and the second position. Particularly, in the present disclosure, the Mohs hardness of the first substrate is greater than or equal to 5H. In comparison with a substrate using a flexible film material, when the Mohs hardness of the first substrate is greater than or equal to 5H, the first wall surface is less prone to vibration in a process of transferring the reaction solution to the reaction surface. Therefore, the distance between the first wall surface and the reaction surface of the sample carrier can be effectively controlled, thereby ensuring transfer quality of the reaction solution. This prevents damage to the reaction surface caused when the first wall surface contacts the reaction surface, or avoids incomplete transfer of the reaction solution to the reaction surface due to excessive distance between the first wall surface and the reaction surface.

### BRIEF DESCRIPTION OF DRAWINGS

To describe the technical schemes in embodiments of the present disclosure or in existing technologies more clearly, the accompanying drawings required for describing embodiments or existing technologies are briefly described below. Clearly, the accompanying drawings in the following description merely show some embodiments of the present disclosure, and those having ordinary skills in the art may still derive other accompanying drawings based on the structures shown in these accompanying drawings without creative efforts.
FIG. 1 is a schematic side view of a liquid transfer device according to a first embodiment of the present disclosure, where a fixing part and a first driving part are omitted, and a first substrate is located at a first position.
FIG. 2 is a schematic side view of a liquid transfer device according to a first embodiment of the present disclosure, where a fixing part and a first driving part are omitted, and a first substrate is located at a second position.
FIG. 3 is a schematic perspective view of a liquid transfer device according to a second embodiment of the present disclosure.
FIG. 4 is a schematic side view of a liquid transfer device according to a third embodiment of the present disclosure.
FIG. 5 is a schematic perspective view of a liquid transfer device according to a fourth embodiment of the present disclosure.
FIG. 6 is a first schematic side view of a liquid transfer device according to a fifth embodiment of the present disclosure.
FIG. 7 is a second schematic side view of a liquid transfer device according to a fifth embodiment of the present disclosure, where a fixing part and a first driving part are omitted.
FIG. 8 is a first schematic side view of a liquid transfer device according to a sixth embodiment of the present disclosure.
FIG. 9 is a second schematic side view of a liquid transfer device according to a sixth embodiment of the present disclosure, where a fixing part and a first driving part are omitted.
FIG. 10 is a schematic side view of a liquid transfer device according to a seventh embodiment of the present disclosure.
FIG. 11 is a schematic side view of a liquid transfer device according to an eighth embodiment of the present disclosure, where a fixing part and a first driving part are omitted, a first substrate is located at a first position, and a second substrate is located at a fifth position.
FIG. 12 is a schematic side view of a liquid transfer device according to an eighth embodiment of the present disclosure, where a fixing part and a first driving part are omitted, a first substrate is located at a second position, and a second substrate is located at a fourth position.
FIG. 13 is a schematic side view of a liquid transfer device according to a ninth embodiment of the present disclosure, where a fixing part and a first driving part are omitted, a first substrate is located at a first position, and a second substrate is located at a fourth position.
FIG. 14 is a schematic side view of a liquid transfer device according to a ninth embodiment of the present disclosure, where a fixing part and a first driving part are omitted, a first substrate is located at a second position, and a second substrate is located at a fifth position.
FIG. 15 is a schematic side view of a liquid transfer device according to a tenth embodiment of the present disclosure, where a fixing part and a first driving part are omitted, a first substrate is located at a first position, a second substrate is located at a fourth position, and the fixing part is located at a seventh position.
FIG. 16 is a schematic side view of a liquid transfer device according to a tenth embodiment of the present disclosure, where a fixing part and a first driving part are omitted, a first substrate is located at a second position, a second substrate is located at a fifth position, and the fixing part is located at a sixth position.
FIG. 17 is a schematic side view of a liquid transfer device according to a tenth embodiment of the present disclosure, where a fixing part and a first driving part are omitted, a first substrate is located at a second position, a second substrate is located at a fifth position, and the fixing part is located at a sixth position.
FIG. 18 is a schematic side view of a liquid transfer device according to an eleventh embodiment of the present disclosure, where a fixing part and a first driving part are omitted, a first substrate is located at a first position, and a second substrate is located at a fifth position.
FIG. 19 is a schematic side view of a liquid transfer device according to an eleventh embodiment of the present disclosure, where a fixing part and a first driving part are omitted, a first substrate is located at a second position, and a second substrate is located at a fourth position.
FIG. 20 is a schematic side view of a liquid transfer device according to a twelfth embodiment of the present disclosure, where a first substrate is located at a second position, and a second substrate is located at a fifth position.
FIG. 21 is a schematic side view of a liquid transfer device according to a thirteenth embodiment of the present disclosure, where a first substrate is located at a second position, and a second substrate is located at a fifth position.
FIG. 22 is a schematic side view of a liquid transfer device according to a fourteenth embodiment of the present disclosure, where a fixing part and a first driving part are omitted, and a first substrate is located at a first position.
FIG. 23 is a schematic side view of a liquid transfer device according to a fourteenth embodiment of the present disclosure, where a fixing part and a first driving part are omitted, and a first substrate is located at a second position.
FIG. 24 is a schematic side view of a liquid transfer device according to a fifteenth embodiment of the present disclosure, where a fixing part and a first driving part are omitted, and a first substrate is located at a first position.
FIG. 25 is a schematic side view of a liquid transfer device according to a fifteenth embodiment of the present disclosure, where a fixing part and a first driving part are omitted, and a first substrate is located at a second position.
FIG. 26 is a schematic side view of a liquid transfer device according to a sixteenth embodiment of the present disclosure, where a fixing part and a first driving part are omitted, and a first substrate is located at a first position.
FIG. 27 is a schematic side view of a liquid transfer device according to a sixteenth embodiment of the present disclosure, where a fixing part and a first driving part are omitted, and a first substrate is located at a second position.
FIG. 28 is a schematic side view of a liquid transfer device according to a sixteenth embodiment of the present disclosure, where a fixing part and a first driving part are omitted, and a first substrate is located at a third position.
FIG. 29 is a schematic side view of a liquid transfer device according to a seventeenth embodiment of the present disclosure, where a fixing part and a first driving part are omitted, a first substrate is located at a second position, a second substrate is located at a fourth position, and the fixing part is located at a sixth position.
FIG. 30 is a schematic side view of a liquid transfer device according to a seventeenth embodiment of the present disclosure, where a fixing part and a first driving part are omitted, a first substrate is located at a first position, a second substrate is located at a fifth position, and the fixing part is located at a seventh position.
FIG. 31 is a schematic side view of a liquid transfer device according to an eighteenth embodiment of the present disclosure, where a fixing part and a first driving part are omitted, a first substrate is located at a second position, a second substrate is located at a fourth position, and the fixing part is located at a sixth position.
FIG. 32 is a schematic side view of a liquid transfer device according to an embodiment of a second aspect of the present disclosure, where a fixing part and a first driving part are omitted, and the fixing part is located at a second position.
FIG. 33 is a schematic side view of a liquid transfer device according to an embodiment of a second aspect of the present disclosure, where a fixing part and a first driving part are omitted, and the fixing part is located at a first position.

### Reference numerals:

100-liquid transfer device;
   110-fixing part; 111-fixing structure; 112-sixth position; 113-seventh position;
   120-first substrate; 121-first wall surface; 1211-first region; 1212-second region; 1213-third region; 122-first position; 123-second position; 124-third position; 125-first cross-sectional side edge; 126-second cross-sectional side edge;
   130-first driving part;
   140-liquid distribution part;
   150-cleaning part;
   160-second substrate; 161-second wall surface; 162-fourth position; 163-fifth position;
   170-third driving part;
200-sample carrier; 210-reaction surface;
300-liquid transfer device;
   310-first substrate; 311-first position; 312-second position;
X1-first direction;
Y-second direction; and
X2-third direction.

The realization of the objectives, functional features and advantages of the present disclosure are further described in combination with the embodiments with reference to the accompanying drawings.

### DETAILED DESCRIPTION

The following clearly and completely describes the technical schemes in the embodiments of the present disclosure with reference to the accompanying drawings in the embodiments of the present disclosure. Apparently, the described embodiments are merely some embodiments of the present disclosure rather than all of the embodiments. All other embodiments obtained by those having ordinary skills in the art without creative efforts based on the embodiments of the present disclosure shall fall within the protection scope of the present disclosure.

It should be noted that if the embodiments of the present disclosure involve directional indications (such as up, down, left, right, front, back/rear, etc.), the directional indications are only used to explain the relative position relationship, movement status, etc., between the components in a specific pose. If the specific pose changes, the directional indications will also change accordingly.

In addition, if the embodiments of the present disclosure involve the terms such as "first," "second" and the like, the terms are used merely for the purpose of description, and are not intended to indicate or imply relative importance or implicitly point out the number of the indicated technical feature. Therefore, the feature defined by "first" or "second" may explicitly or implicitly include at least one such feature. In addition, as used herein, the meaning of the term "and/or" includes three parallel schemes. For example, "A and/or B" includes scheme A, scheme B, or a scheme in which A and B are satisfied at the same time. In addition, the technical schemes of the embodiments may be combined to form new schemes, as long as the new schemes can be realized by those having ordinary skills in the art. When the technical schemes to be combined conflict with each other or when a combination of technical schemes cannot be realized, it should be considered that the combination of technical schemes does not exist and is not within the scope of protection claimed by the present disclosure.

In the related art, to reduce costs and increase throughput, a liquid transfer device is employed to accomplish liquid transfer. A reagent thin layer is coated on a surface of a film substrate. The film substrate carrying the reagent thin layer is driven to move toward a sample carrier, such that the moving film substrate passes over the sample carrier and transfers, to the sample carrier, the reagent thin layer carried by the film substrate, to achieve liquid transfer. However, because the film substrate is made of a flexible material, the film substrate carrying the thin layer of reagent may undergo vibration during its movement towards the sample carrier. This results in a risk of scraping or scratching against the sample carrier, which adversely affects the stability of liquid transfer.

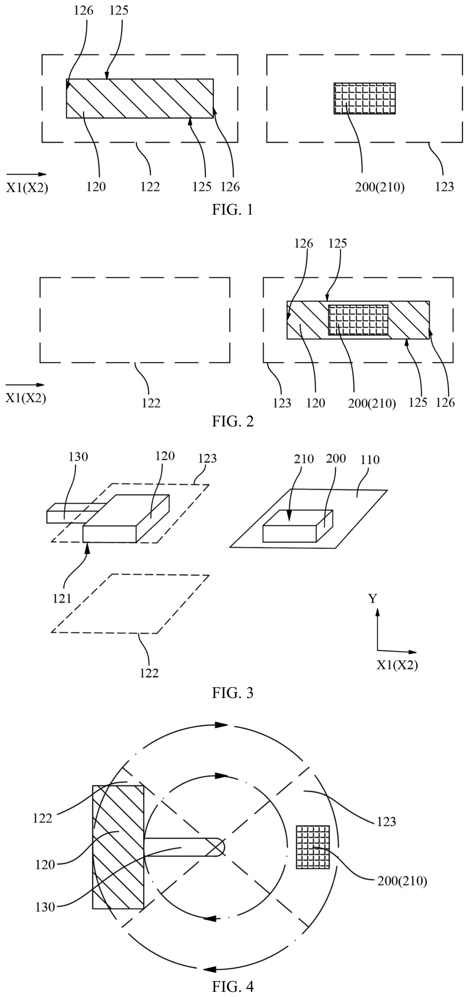

In view of the above, with reference to FIG. 1 to FIG. 31, an embodiment of a first aspect of the present disclosure provides a liquid transfer device 100, configured to direct a reaction solution to a reaction surface 210 of a sample carrier 200. Specifically, in some embodiments, the reaction solution in the present disclosure may be a liquid reagent, a reagent thin layer (liquid film), or the like, and the sample carrier 200 may be a chip, an imageable substance, a biological material, or the like. The function of the liquid transfer device 100 in the present disclosure may be understood as enabling the reaction solution to be transferred to the reaction surface 210 of the sample carrier 200. Therefore, in some embodiments, the liquid transfer device 100 may only need to position the reaction solution around the reaction surface 210, such that the reaction solution can be directed to the reaction surface 210 due to the properties of the reaction solution or effects of other physical/chemical phenomena. In addition, a working process of the liquid transfer device 100 may include multiple processes of liquid aspiration, movement, and liquid guidance. Specifically, the liquid transfer device 100 includes a fixing part 110, a first substrate 120, and a first driving part 130.

With reference to FIG. 1 to FIG. 3, the fixing part 110 includes a fixing structure 111. The fixing structure 111 is configured to fix the sample carrier 200. In other words, the fixing structure 111 is configured to fix and place the sample carrier 200. Specifically, in some embodiments, the fixing part 110 may include a support plate, and the support plate is configured to support and place the sample carrier 200. To better fix the sample carrier 200, in some embodiments, in one aspect, the fixing structure 111 may be a clamping member, and the clamping member may include a clamping jaw, a clamping block, and the like; in another aspect, the fixing structure 111 may be a connection and fixation structure such as a snap-fit member or a magnetic adsorption member; and in another aspect, the fixing structure 111 may have an accommodating cavity, such that the sample carrier 200 is adapted to be placed into the accommodating cavity.

With reference to FIG. 1 to FIG. 3, the first substrate 120 includes a first wall surface 121. The first substrate 120 has a first position 122 and a second position 123 that are relative to the fixing part 110. When the first substrate 120 is located at the first position 122, the first wall surface 121 is configured to obtain the reaction solution. Based on different types of reaction solution and different methods for liquid guidance, in some embodiments, the reaction solution may be included in a reagent nozzle, included in a reagent tank, or included in a reagent tube. It may be understood that, when the first substrate 120 is located at the first position 122, the first wall surface 121 can obtain the reaction solution. Specifically, in some embodiments, a method by which the first wall surface 121 obtains the reaction solution may be generating a shear force within a suitable gap range through relative motion between the first wall surface 121 and the reaction solution, and transferring the reaction solution to the first wall surface 121; or pouring or injecting the reaction solution onto the first wall surface 121 by using an external force. Further, when the first substrate 120 is located at the second position 123, the first wall surface 121 is configured to direct the reaction solution to the reaction surface 210. It may be understood that, when the first substrate 120 is located at the second position 123, the first wall surface 121 can direct the reaction solution thereon to the reaction surface 210 of the sample carrier 200. Specifically, in some embodiments, a method by which the first wall surface 121 directs the reaction solution to the reaction surface 210 may be generating a shear force within a suitable gap range through relative motion between the first substrate 120 and the sample carrier 200, where the shear force can transfer the reaction solution from the first substrate 120 to the reaction surface 210 of the sample carrier 200. More specifically, in some embodiments, the suitable gap range may be a gap that satisfies a minimum condition for a reaction solution replacement ratio.

With reference to FIG. 1 to FIG. 3, the first driving part 130 is configured to drive the first substrate 120 to perform position switching between the first position 122 and the second position 123. It may be understood that the first driving part 130 is configured to drive the first substrate 120 to move to the first position 122 or the second position 123. Based on a function of the first driving part 130, in some embodiments, the first driving part 130 may include a driving device such as a motor, a hydraulic cylinder, a pneumatic cylinder, or an electric cylinder, thereby facilitating control of a driving operation of the first driving part 130. The first driving part 130 may further include a mechanical actuation structure, for example, a rotating shaft structure, a telescoping structure, or the like. Based on this, the first driving part 130 may alternatively be driven only by a manual force.

When the first substrate 120 is located at the second position 123 and directs the reaction solution to the reaction surface 210, stable control of a gap between the first substrate 120 and the reaction surface 210 may be affected by vibration of the first substrate 120 or the fixing part 110 due to an external or internal factor. Therefore, to improve stability of transferring the reaction solution, particularly, in the present disclosure, Mohs hardness of the first substrate 120 is greater than or equal to 5H. The Mohs hardness is a measure of hardness utilizing a scratching method, where a surface of a test object is scratched and depth of the scratch is measured. The depth of the scratch is used to quantify the Mohs hardness. Hardness of the test object is determined through mutual scratching comparison with a standard mineral in a Mohs hardness kit.

Based on combination of the foregoing embodiments, it may be learned that the liquid transfer device 100 includes the fixing part 110, the first substrate 120, and the first driving part 130. The fixing part 110 includes a fixing structure 111, where the fixing structure 111 is configured to fix the sample carrier 200. The first substrate 120 includes the first wall surface 121, and the first substrate 120 has the first position 122 and the second position 123 that are relative to the fixing part 110. When the first substrate 120 is located at the first position 122, the first wall surface 121 is configured to obtain the reaction solution, and when the first substrate 120 is located at the second position 123, the first wall surface 121 is configured to direct the reaction solution to the reaction surface 210. The first driving part 130 is configured to drive the first substrate 120 to perform position switching between the first position 122 and the second position 123. Particularly, in the present disclosure, the Mohs hardness of the first substrate 120 is greater than or equal to 5H. In comparison with a substrate using a flexible thin film material, when the Mohs hardness of the first substrate 120 is greater than or equal to 5H, the first wall surface 121 is less prone to vibration in a process of transferring the reaction solution to the reaction surface 210. In addition, when the Mohs hardness of the first substrate 120 is greater than or equal to 5H, the transfer effect of the reaction solution is significantly improved compared with that of a conventional solution. Specifically, as shown in Table 1, it may be learned from some experimental values that, when the reaction solution is transferred by using a flow cell, a gap/reaction surface reagent thickness needs to be 60 µm, and reagent consumption is 588 ul; when the reaction solution is transferred by using a reaction surface immersion method, the gap/reaction surface reagent thickness needs to be 30 µm, and the reagent consumption is 294 ul; when the reaction solution is transferred by using a PET film substrate, the gap/reaction surface reagent thickness needs to be 30 µm, and the reagent consumption is 294 ul; and when the reaction solution is transferred by using a glass substrate (where Mohs hardness is greater than and equal to 5H), the gap/reaction surface reagent thickness needs to be 10 µm, and the reagent consumption is 98 ul. As a result, it may be learned that, when the Mohs hardness of the first substrate 120 is greater than or equal to 5H, this facilitates control of the transfer gap, and significantly reduces the reagent consumption. Therefore, the present disclosure can effectively control a distance between the first wall surface 121 and the reaction surface 210 of the sample carrier 200, thereby ensuring transfer quality of the reaction solution. This prevents damage to the reaction surface 210 caused when the first wall surface 121 contacts the reaction surface 210, or avoids incomplete transfer of the reaction solution to the reaction surface 210 due to excessive distance between the first wall surface 121 and the reaction surface 210.

**Table 1**

| Reaction solution transfer method | Gap/reaction surface reagent thickness | Reagent replacement ratio | Reagent consumption (where a reaction surface area is 70*70 mm) |
|---|---|---|---|
| Flow cell | 60 µm | 2 | 588 ul |
| Immersion type | 30 µm | 2 | 294 ul |
| PET film substrate | 30 µm | 2 | 294 ul |
| Glass substrate | 10 µm | 2 | 98 ul |

The first substrate 120 may have different shapes or motion forms to meet different liquid guidance requirements. With reference to FIG. 1 and FIG. 2 and FIG. 6, in a first configuration of the first substrate 120, the first wall surface 121 may be planar and parallel to the reaction surface 210. Based on this, the first substrate 120 may be a plate, and the first wall surface 121 may be planar. In this embodiment, because the first wall surface 121 is parallel to the reaction surface 210, the reaction solution can be more easily directed to the reaction surface 210 under the action of the shear force. In addition, the parallel arrangement ensures consistent distance between corresponding points on the two surfaces, such that the reaction solution obtained at all points on the reaction surface 210 is more uniform. Specifically, with reference to FIG. 1 and FIG. 2 and FIG. 6, in some embodiments, the first driving part 130 may be configured to drive the first substrate 120 to translate in a direction parallel to the first wall surface 121, to cause the first substrate 120 to perform position switching between the first position 122 and the second position 123. It may be understood that, in this embodiment, the first position 122 may be arranged relative to the second position 123 in the direction parallel to the first wall surface 121. Therefore, the first driving part 130 drives the first substrate 120 to translate in the direction parallel to the first wall surface 121, such that the first substrate 120 can switch between the first position 122 and the second position 123.

Correspondingly, with reference to FIG. 3, in some other embodiments, the first substrate 120 and the sample carrier 200 may be arranged opposite to each other in a first direction X1, and the first driving part 130 may be configured to drive the first substrate 120 to translate in a direction perpendicular to the first direction X1; or the first driving part 130 may be configured to drive the first substrate 120 to translate in a direction perpendicular to the first wall surface 121. In this way, the first substrate 120 can perform position switching between the first position 122 and the second position 123. For a motion mode set above, in some specific embodiments, with reference to FIG. 3, in an initial state, the first wall surface 121 is an upper side wall surface of the first substrate 120, the reaction surface 210 is a lower side wall surface of the sample carrier 200, and the first substrate 120 may be located at the lower first position 122, to obtain the reaction solution. Then, the first driving part 130 may drive the first substrate 120 to translate to the second position 123 in a second direction Y (vertical direction) perpendicular to the first direction X1, while the sample carrier 200 may translate and move in the first direction X1 (horizontal direction) and approach the first substrate 120, to facilitate obtaining of the reaction solution. After the movement is completed, the first substrate 120 is located at the second position 123, the sample carrier 200 is located below the first substrate 120, and the first wall surface 121 is opposite to the reaction surface 210, such that the first wall surface 121 can direct the reaction solution to the reaction surface 210.

With reference to FIG. 4, in a second configuration of the first substrate 120, the first wall surface 121 may be planar and parallel to the reaction surface 210, and the first driving part 130 may be configured to drive the first substrate 120 to rotate about an axis perpendicular to the first wall surface 121, to cause the first substrate 120 to perform position switching between the first position 122 and the second position 123. Based on this, the axis about which the first substrate 120 rotates may be an axis inherent to the first substrate 120, or may be an axis constructed externally to the first substrate 120. Specifically, with reference to FIG. 4, in some embodiments, the first substrate 120 may be a flat plate; or in some other embodiments, the first substrate 120 may be in the shape of a disk. The first position 122 and the second position 123 may be regions arranged about the rotation axis of the first substrate 120. It may be understood that, in this embodiment, the first substrate 120 can rotate about the axis perpendicular to the first wall surface 121, and the first substrate 120 can rotate to the first position 122 and the second position 123 that are circumferentially opposite to each other, thereby achieving the position switching of the first substrate 120.

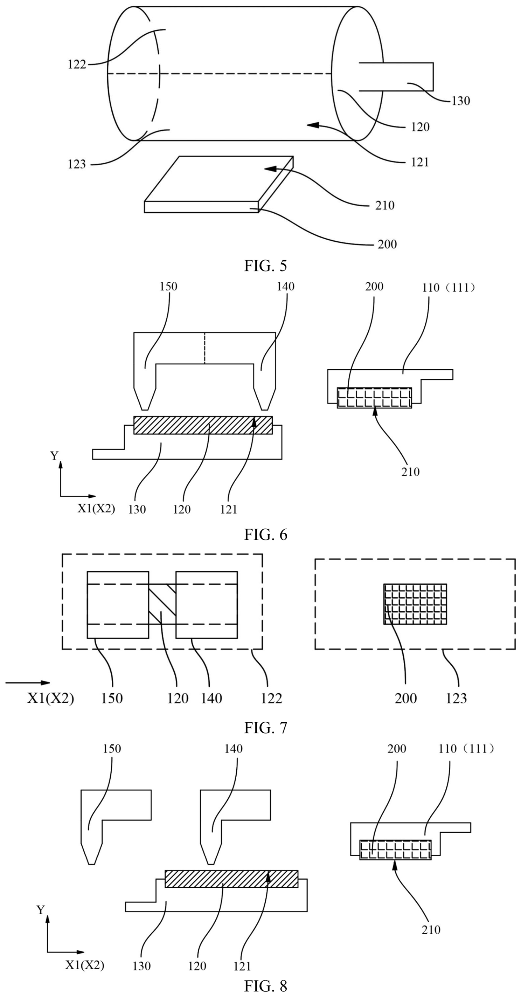

With reference to FIG. 5, in a third configuration of the first substrate 120, the first wall surface 121 may be a cylindrical surface. A central axis of the cylindrical surface may be parallel to the reaction surface 210. Specifically, the first substrate 120 may be in a tubular shape. Based on this, the first wall surface 121 may be an annular peripheral wall surface of the first substrate 120. The first driving part 130 may be configured to drive the first substrate 120 to rotate about the central axis, to cause the first substrate 120 to perform position switching between the first position 122 and the second position 123. It may be understood that, in this embodiment, in a process of rolling the first substrate 120 about the central axis, relative to a position of the reaction surface 210, the first position 122 and the second position 123 of the first substrate 120 located in a circumferential direction of the central axis can alternately be opposite to the position of the reaction surface 210.

To facilitate obtaining of the reaction solution by the first substrate 120, with reference to FIG. 6 to FIG. 10, in some embodiments, the liquid transfer device 100 may further include a liquid distribution part 140. The liquid distribution part 140 may be configured to distribute the reaction solution onto the first wall surface 121 when the first substrate 120 is located at the first position 122. Specifically, in some embodiments, the liquid distribution part 140 may include a spray nozzle, to spray the reaction solution onto the first wall surface 121. The liquid distribution part 140 may include a reagent accommodation chamber. After the reaction solution is injected into the reagent accommodation chamber, the first substrate 120 can obtain the reaction solution through movement of the liquid distribution part 140 or movement of the first substrate 120. In some embodiments, the liquid distribution part 140 may include a reagent tube, and the reagent tube may inject the reaction solution onto the first wall surface 121.

Further, to facilitate cleaning of the first substrate 120, with reference to FIG. 6 to FIG. 10, in some embodiments, the liquid transfer device 100 may further include a cleaning part 150. For different cleaning methods of the cleaning part 150, in some embodiments, the cleaning part 150 may be configured to clean the first wall surface 121. Specifically, with reference to FIG. 6 and FIG. 7, in some embodiments, the cleaning part 150 may be configured to clean the first wall surface 121 after the first substrate 120 has transferred the reaction solution to the reaction surface 210 at the second position 123 and moved to the first position 122. It may be understood that, in this embodiment, the cleaning part 150 is located at the first position 122. After the first substrate 120 directs the reaction solution to the reaction surface 210 at the second position 123 (after the first substrate 120 completes a liquid guidance operation), the first substrate 120 can return to the first position 122, residual reaction solution may remain on the first wall surface 121, and at this time, the cleaning part 150 may clean the first wall surface 121.

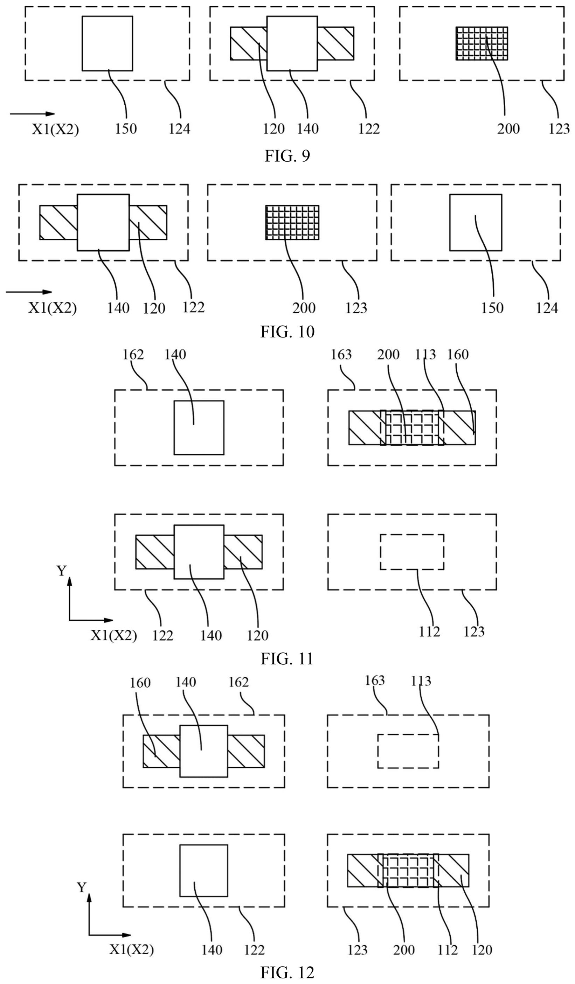

Alternatively, with reference to FIG. 8 and FIG. 9, in some other embodiments describing the cleaning methods, the first substrate 120 may further have a third position 124 relative to the fixing part 110. The first driving part 130 may be configured to drive the first substrate 120 to switch between the second position 123 and the third position 124. Similarly, the liquid transfer device 100 may include a liquid distribution part 140 and a cleaning part 150. The liquid distribution part 140 may be configured to distribute the reaction solution onto the first wall surface 121 when the first substrate 120 is located at the first position 122. The cleaning part 150 may be configured to clean the first wall surface 121 when the first substrate 120 is located at the third position 124. It may be understood that, similar to that in the previous embodiment, in this embodiment, the liquid transfer device 100 may also include a liquid distribution part 140 configured to distribute the reaction solution and a cleaning part 150 configured to clean the first wall surface 121. However, a difference lies in that the first substrate 120 in this embodiment further has the third position 124 relative to the fixing part 110, and the third position 124 may be independently arranged outside the first position 122 and the second position 123, such that the three positions arranged for the first substrate 120 can correspond to different operations respectively. This facilitates integration and control of the liquid transfer device 100, and ensures that actions corresponding to the positions do not interfere with each other.

With reference to FIG. 9 and FIG. 10, in different embodiments, a positional relationship among the first position 122, the second position 123, and the third position 124 may vary according to a specific liquid guidance requirement.

For the cleaning methods of the cleaning part 150 described above, in some embodiments, the cleaning part 150 may use a cleaning fluid as a cleaning material, and the cleaning fluid may be water, a specially formulated solution, or the like. The cleaning part 150 may employ a spray nozzle or needle-type nozzle to output the cleaning fluid, thereby flushing the first substrate 120. In some other embodiments, the cleaning part 150 may include a cleaning fluid accommodation chamber. After the cleaning fluid is injected into the cleaning fluid accommodation chamber, the first substrate 120 can contact the cleaning fluid through movement of the cleaning part 150 or movement of the first substrate 120, thereby achieving a cleaning effect. In some other embodiments, the cleaning part 150 may drive a cleaning tool to move, to clean the first substrate 120. The cleaning tool may include a brush or a cleaning cloth. In some other embodiments, a removable and replaceable liquid guidance film may be further arranged on the first wall surface 121, and the cleaning part 150 may achieve the cleaning effect by replacing the liquid guidance film.

Furthermore, in some embodiments, the cleaning part 150 may further include a hot air device. After the cleaning part 150 finishes cleaning, the hot air device may then blow hot air to dry the first substrate 120, such that surface quality of the cleaned first substrate 120 is improved, and maintenance of the first substrate 120 is facilitated.

It may be understood that, when the first substrate 120 in the foregoing embodiments is located at different positions, operations such as liquid aspiration, liquid guidance, and cleaning may be performed. Further, to improve working efficiency of the liquid transfer device 100, with reference to FIG. 11 and FIG. 12 and FIG. 20, in some embodiments, the liquid transfer device 100 may further include a second substrate 160. The second substrate 160 may include a second wall surface 161. The second substrate 160 may have a fourth position 162 and a fifth position 163 that are relative to the fixing part 110. When the second substrate 160 is located at the fourth position 162, the second wall surface 161 may be configured to obtain the reaction solution. When the second substrate 160 is located at the fifth position 163, the second wall surface 161 may be configured to direct the reaction solution to the reaction surface 210. It may be understood that, in this embodiment, the second substrate 160 has a function similar to that of the first substrate 120 in the foregoing embodiment, and may also be configured to obtain the reaction solution or direct the reaction solution to the reaction surface 210. Therefore, for structure and arrangement of the second substrate 160, reference may be made to the descriptions of the first substrate 120 in the foregoing embodiment. In this embodiment, a purpose of arranging the second substrate 160 is to simultaneously arrange the first substrate 120 and the second substrate 160 having similar functions, such that one substrate performs an operation such as liquid aspiration, liquid guidance, or cleaning, while the other substrate can simultaneously perform another operation. In this way, the foregoing arrangement can improve liquid guidance efficiency of the liquid transfer device 100 across a plurality of sample carriers 200, and can also enable the two substrates to alternately perform a liquid guidance operation on a same sample carrier 200 when the sample carrier 200 requires multiple operations.

Therefore, in some embodiments, the second substrate 160 can be configured similarly to the first substrate 120. Similarly, to improve the stability of transferring the reaction solution, in some embodiments, Mohs hardness of the second substrate 160 may be greater than or equal to 5H. Similar to the first substrate 120, in this embodiment, limiting the Mohs hardness of the second substrate 160 can effectively control a distance between the second wall surface 161 and the reaction surface 210 of the sample carrier 200, thereby ensuring transfer quality of the reaction solution. This prevents damage to the reaction surface 210 caused when the second wall surface 161 contacts the reaction surface 210, or avoids incomplete transfer of the reaction solution to the reaction surface 210 due to excessive distance between the second wall surface 161 and the reaction surface 210.

To facilitate position switching of the second substrate 160 between different positions, with reference to FIG. 11 and FIG. 12 and FIG. 20, in some embodiments, the first driving part 130 may be configured to drive the second substrate 160 to perform position switching between the fourth position 162 and the fifth position 163; or in some other embodiments, the liquid transfer device 100 may further include a second driving part configured to drive the second substrate 160 to perform position switching between the fourth position 162 and the fifth position 163. That is, according to the driving requirement, in different embodiments, the first substrate 120 and the second substrate 160 may be driven by the same driving part, and the first substrate 120 and the second substrate 160 may be driven simultaneously; or the two substrates may be driven separately by different driving parts.

In addition, to further improve the working efficiency of the liquid transfer device 100, in some embodiments, the liquid transfer device 100 may further include more than two substrates. For example, the liquid transfer device 100 may further include a third substrate, a fourth substrate, or the like equivalent to the first substrate 120 or the second substrate 160. For convenience of description, an embodiment in which the liquid transfer device 100 includes the first substrate 120 and the second substrate 160, and the first driving part 130 can drive the first substrate 120 or the second substrate 160 is described below, and different embodiments may be combined with each other across different technical schemes.

It should be noted that the embodiment in which the liquid transfer device 100 includes a plurality of substrates may correspond to different arrangements. For example, the substrates may be driven in a same direction or in different directions by the first driving part 130. In some embodiments, the substrates may be connected or disconnected from each other, or in some other embodiments, the substrates may be different parts partitioned from a same substrate. For convenience of description, an embodiment in which the substrates are disconnected from each other is described below, and different embodiments may be combined with each other across different technical schemes.

It may be understood that both the second substrate 160 and the first substrate 120 described above can be configured for liquid guidance. Further, to efficiently clean the reaction surface 210, in some embodiments, the first substrate 120 and the second substrate 160 can be configured to clean the reaction surface 210. Specifically, when one of the substrates obtains the reaction solution, the other substrate may simultaneously clean the reaction surface 210, to achieve higher efficiency. In some other embodiments, a plurality of substrates may alternatively be arranged for cleaning the reaction surface 210. Specifically, in some embodiments, the liquid transfer device 100 may further include a third substrate. Similarly, the third substrate may include a third wall surface. The third substrate may have a cleaning preparation position and a cleaning position. When the third substrate is located at the cleaning preparation position, the third wall surface is configured to obtain a cleaning material, and when the third substrate is located at the cleaning position, the third wall surface is configured to direct a cleaning fluid to the reaction surface 210. In addition, the third substrate may also be driven by the first driving part 130 or another driving part. That is, in different embodiments, an operation of cleaning the reaction surface 210 may be alternately completed by the first substrate 120 and the second substrate 160, or may be completed specifically and independently by the third substrate additionally arranged.

Based on the foregoing embodiment in which the liquid transfer device 100 includes the first substrate 120 and the second substrate 160, to enable one of the substrates to perform a preparatory operation such as liquid aspiration, cleaning, or the like while the other substrate can simultaneously perform a liquid guidance operation, the first substrate 120, the second substrate 160, and the first driving part 130 may be arranged in different manners to achieve the foregoing objective, such that the liquid transfer device 100 operates in different motion modes.

Specifically, for an embodiment in which the first driving part 130 can drive the first substrate 120 and the second substrate 160 to move in parallel, refer to FIG. 11 and FIG. 12 and FIG. 20. In an embodiment corresponding to a first motion mode, the first driving part 130 may be configured to simultaneously drive the first substrate 120 to the first position 122, and drive the second substrate 160 to the fifth position 163 at which the second substrate 160 is spaced apart from and opposite to the fixing structure 111, and simultaneously drive the first substrate 120 to the second position 123 at which the first substrate 120 is spaced apart from and opposite to the fixing structure 111, and drive the second substrate 160 to the fourth position 162. It may be understood that, when the first substrate 120 is located at the second position 123, the first substrate 120 can direct the solution to the reaction surface 210. Simultaneously, the second substrate 160 is located at the fourth position 162, and the second substrate 160 can obtain the reaction solution. On the contrary, when the first substrate 120 is located at the first position 122, the first substrate 120 can obtain the reaction solution. Simultaneously, the second substrate 160 is located at the fifth position 163, and the second substrate 160 can direct the solution to the reaction surface 210. In this embodiment, the first driving part 130 may be configured to simultaneously drive the first substrate 120 and the second substrate 160 to move, such that the two substrates can simultaneously switch between the two positions corresponding to the two substrates. The foregoing arrangement, through respective position switching of the first substrate 120 and the second substrate 160, ensures that there may always be one substrate that can obtain the reaction solution and one substrate that can direct the solution, and is beneficial to improving efficiency of liquid transfer.

It should be noted that, for the embodiment in which the liquid transfer device 100 includes the first substrate 120 and the second substrate 160, in different embodiments, a positional relationship among the first position 122, the second position 123, the fourth position 162, and the fifth position 163 may vary according to requirements. Based on different positions of the first substrate 120 and the second substrate 160, the fixing part 110 may be connected to a plurality of sample carriers 200 located at different positions, or the fixing part 110 may be connected to a corresponding driving part to drive the fixing part 110 to move to different positions. Further, in an embodiment in which a position of the fixing part 110 needs to be changed based on different positions of the substrates, a movement direction of the fixing part 110 may be changed correspondingly based on different arrangements of the first substrate 120 and the second substrate 160.

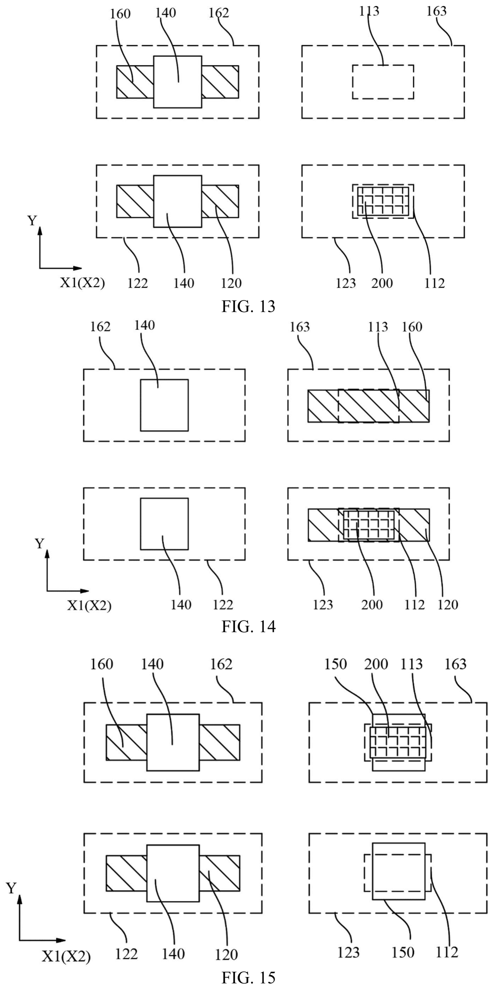

In an embodiment corresponding to a second motion mode, the first driving part 130 may be configured to simultaneously drive the first substrate 120 to the first position 122, and drive the second substrate 160 to the fourth position 162, and simultaneously drive the first substrate 120 to the second position 123, and drive the second substrate 160 to the fifth position 163. It may be understood that, with reference to FIG. 13 and FIG. 14 and FIG. 20, in one case, the first substrate 120 and the second substrate 160 may simultaneously be located at a position for liquid aspiration, or the first substrate 120 and the second substrate 160 may simultaneously be located at a position for liquid guidance, such that the first substrate 120 and the second substrate 160 can work cooperatively to improve efficiency.

In addition, the liquid transfer device 100 may further include an arrangement part, where the arrangement part may be configured to arrange a substrate that has completed liquid guidance, thereby preparing for the next reaction solution obtaining-liquid guidance operation. Therefore, similar to the cleaning part 150 described above, the arrangement part may be configured to clean the substrate that has completed the liquid guidance, for example, may be configured to flush and clean the first wall surface 121 or the second wall surface 161 that has completed the liquid guidance. For a form of the arrangement part, reference may be made to the foregoing descriptions of the cleaning part 150. Further, in some embodiments, the liquid transfer device 100 may further include a third driving part 170, where the third driving part 170 may be connected to the fixing part 110. The third driving part 170 may drive the fixing part 110 to perform position switching between a sixth position 112 and a seventh position 113. It may be understood that, in this embodiment, the third driving part 170 may be configured to drive the fixing part 110 to be adapted to different motion modes of the substrate.

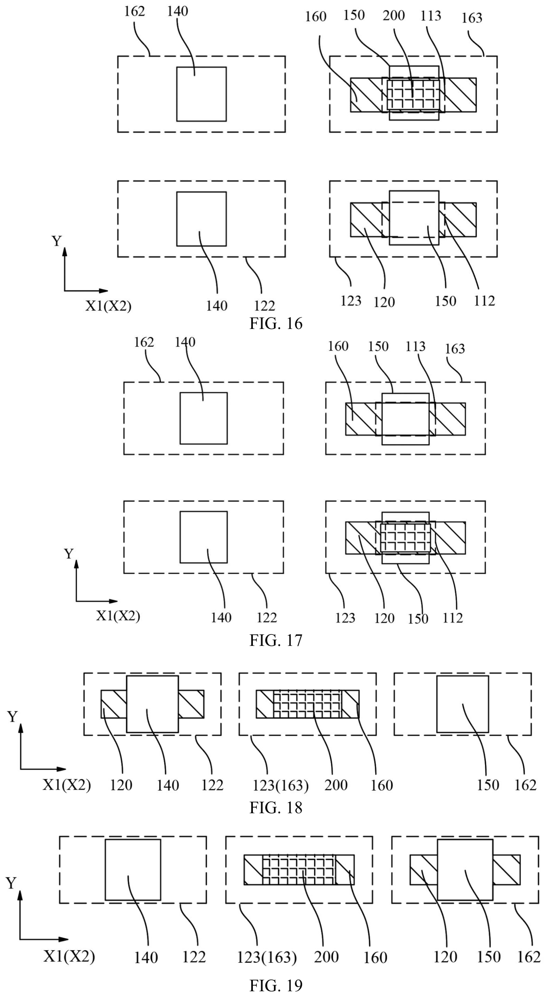

With reference to FIG. 15 to FIG. 17 and FIG. 20, based on the foregoing arrangement, in another case, with reference to FIG. 15, when the first substrate 120 is located at the first position 122, and the second substrate 160 is located at the fourth position 162, both the first substrate 120 and the second substrate 160 can obtain the reaction solution. Then, with reference to FIG. 16, when the first substrate 120 is located at the second position 123, and the second substrate 160 is located at the fifth position 163, the fixing part 110 may be located at the seventh position 113, the second substrate 160 can direct the reaction solution to the reaction surface 210, and simultaneously, the arrangement part may clean the first substrate 120, to prepare for next liquid guidance of the first substrate 120. Then, with reference to FIG. 17, after the second substrate 160 directs the reaction solution to the reaction surface 210, the positions of the first substrate 120 and the second substrate 160 remain unchanged, the third driving part 170 may drive the fixing part 110 to the sixth position 112, the first substrate 120 can direct the reaction solution to the reaction surface 210, and simultaneously, the arrangement part may clean the second substrate 160, to prepare for next liquid guidance of the second substrate 160.

Further, for the second motion mode described above, a driving direction of the first driving part 130 may be limited. Specifically, with reference to FIG. 15 to FIG. 17 and FIG. 20, the first substrate 120 may be arranged spaced apart from and opposite to the second substrate 160 in the second direction Y. The first driving part 130 may be configured to drive the first substrate 120 and the second substrate 160 to reciprocate in the first direction X1 perpendicular to the second direction Y, such that the first driving part 130 simultaneously drives the first substrate 120 to the first position 122, and drives the second substrate 160 to the fourth position 162, and simultaneously drives the first substrate 120 to the second position 123, and drives the second substrate 160 to the fifth position 163. It may be understood that, in this embodiment, the first direction X1 in which the first driving part 130 drives the first substrate 120 to move may be perpendicular to the second direction Y in which the first substrate 120 and the second substrate 160 are arranged opposite to each other. Further, in the foregoing embodiment in which the liquid transfer device 100 includes the third driving part 170, the third driving part 170 may be configured to drive the fixing part 110 to reciprocate in the second direction Y. The foregoing arrangement enables the first substrate 120, the second substrate 160, and the fixing part 110 to be located at different positions corresponding to different states, and makes switching between positions convenient and easily controllable. Further, according to the liquid guidance requirement, in some embodiments, the third driving part 170 may be configured to drive the fixing part 110 to reciprocate in the first direction X1.

With reference to FIG. 18 and FIG. 19 and FIG. 21, in an embodiment corresponding to a third motion mode, the first substrate 120 may be arranged spaced apart from and opposite to the second substrate 160 in the first direction X1. The first driving part 130 may be configured to drive the first substrate 120 and the second substrate 160 to reciprocate in the first direction X1, such that the first driving part 130 simultaneously drives the first substrate 120 to the first position 122, and drives the second substrate 160 to the fifth position 163 at which the second substrate 160 is spaced apart from and opposite to the fixing structure 111, and simultaneously drives the first substrate 120 to the second position 123 at which the first substrate 120 is spaced apart from and opposite to the fixing structure 111, and drives the second substrate 160 to the fourth position 162. It may be understood that, unlike the second motion mode described above, in this embodiment, a movement direction of the first substrate 120 and the second substrate 160 is the same as the relative arrangement direction of the first substrate 120 and the second substrate 160. In some embodiments, the fixing part 110 may be fixedly arranged, and the fixing part 110 can receive the reaction solution from different substrates only through movement of the first substrate 120 and the second substrate 160. According to different liquid guidance requirements, in some other embodiments, the liquid transfer device 100 may also include a third driving part 170. The third driving part 170 may be connected to the fixing part 110, such that the third driving part 170 can be configured to drive the fixing part 110 to reciprocate in the first direction X1 or the second direction Y.

With reference to FIG. 4 and FIG. 22 and FIG. 23, for an embodiment in which the first driving part 130 can drive the first substrate 120 and the second substrate 160 to rotate, in an embodiment corresponding to a fourth motion mode, the first wall surface 121 may be planar and parallel to the reaction surface 210. The first driving part 130 may be configured to drive the first substrate 120 to rotate about an axis perpendicular to the first wall surface 121, to cause the first substrate 120 to perform position switching between the first position 122 and the second position 123. The axis may pass through the first wall surface 121. That is, in this embodiment, the position switching of the first substrate 120 is achieved through rotation.

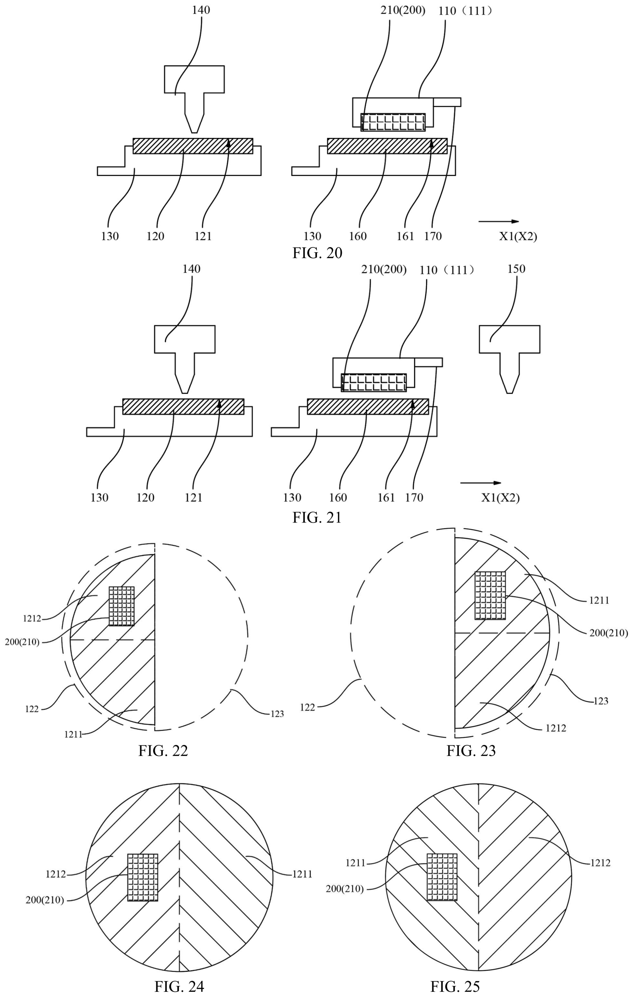

Based on this, with reference to FIG. 22 to FIG. 25, the first wall surface 121 may include a first region 1211 and a second region 1212. The first region 1211 and the second region 1212 may be distributed in a circumferential direction of the axis. The first region 1211 may be configured to obtain the reaction solution when the first substrate 120 is located at the first position 122. Correspondingly, the first region 1211 may be configured to transfer the obtained reaction solution to the reaction surface 210 when the first substrate 120 is located at the second position 123. For different motion modes set above, with reference to FIG. 22, in some embodiments, the first substrate 120 may be located at the first position 122 first, and at this time, the first region 1211 can obtain the reaction solution, and the second region 1212 can transfer the reaction solution to the reaction surface 210. For a motion state after the foregoing operation is completed, in one case, the first substrate 120 may rotate 90° clockwise as shown in the figure, such that the first region 1211 is located at a position where the second region 1212 is previously located and can transfer the reaction solution to the reaction surface 210. After the 90° rotation, liquid distribution or cleaning may be performed on the second region 1212. After the foregoing operation is completed, the first substrate 120 may further rotate clockwise to complete another operation, or the first substrate 120 may rotate 90° counterclockwise to return to a state shown in FIG. 22, and may perform the reciprocating motion for multiple times. With reference to FIG. 23, in another case, the first substrate 120 may rotate 180° clockwise as shown in the figure, such that the first region 1211 is located at an upper portion in the figure, and the second region 1212 is located at a lower portion in the figure. Therefore, within a circular rotation range in the figure, the upper portion can be used for liquid guidance, the lower portion can be used for liquid distribution, and the fixing part 110 and the liquid distribution part 140 can be correspondingly moved or arranged at different positions. With reference to FIG. 24 and FIG. 25, in some other embodiments, the first position 122 and the second position 123 may respectively represent different rotational positions of the first substrate 120. Specifically, with reference to FIG. 24, when the first substrate 120 is located at the first position 122, the first region 1211 can obtain the reaction solution of the liquid distribution part 140, and the second region 1212 can transfer the reaction solution to the reaction surface 210. After the foregoing action is completed, with reference to FIG. 25, the first substrate 120 can rotate 180° clockwise to the second position 123, and at this time, the first region 1211 can transfer the reaction solution to the reaction surface 210, and the second region 1212 can obtain the reaction solution of the liquid distribution part 140. Then, the first substrate 120 may continue to rotate 180° clockwise or rotate 180° counterclockwise, to perform the reciprocating motion for multiple times. It may be understood that, in some embodiments, the first region 1211 and the second region 1212 of the first substrate 120 in the circumferential direction of the axis may be respectively configured to obtain the reaction solution and direct the solution. When the first substrate 120 is located at the first position 122 or the second position 123, there may always be one region that can obtain the reaction solution and one region that can direct the solution. This is beneficial to improving the efficiency of the liquid transfer.

Further, corresponding to the rotation of the first substrate 120 about the axis, the liquid transfer device 100 may also include a third driving part 170. In addition, the third driving part 170 may be connected to the fixing part 110, such that the third driving part 170 can be configured to drive the fixing part 110 to rotate about the axis, or configured to drive the fixing part 110 to move in a direction perpendicular to the rotation axis of the first substrate 120.

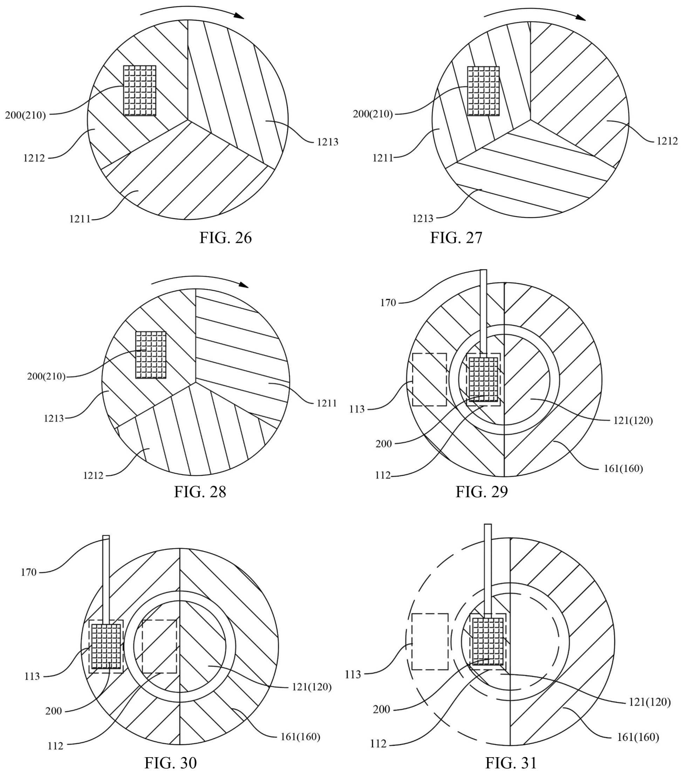

With reference to FIG. 26 to FIG. 28, based on the foregoing configuration in which the first substrate 120 can rotate about the axis, a region of the first wall surface 121 may be further divided, such that the first wall surface 121 can simultaneously implement a greater variety of operations. Specifically, in an embodiment corresponding to a fifth motion mode, the first wall surface 121 may further include a third region 1213. Specifically, the first region 1211, the second region 1212, and the third region 1213 may be sequentially arranged in a rotation direction of the first substrate 120. The first substrate 120 may further include a third position 124. In the rotation direction of the first substrate 120, the first driving part 130 may drive the first substrate 120 to perform cyclic rotation in a sequence of rotating from the first position 122 to the second position 123, rotating from the second position 123 to the third position 124, and rotating from the third position 124 to the first position 122.

Based on the foregoing configuration, with reference to FIG. 26 to FIG. 28, in some embodiments, the liquid transfer device 100 may include a liquid distribution part 140 and a cleaning part 150. In a process in which the first substrate 120 is sequentially located at the first position 122, the second position 123, and the third position 124, the first region 1211, the third region 1213, and the second region 1212 may sequentially obtain the reaction solution of the liquid distribution part 140; the second region 1212, the first region 1211, and the third region 1213 sequentially transfer the reaction solution to the reaction surface 210; and the third region 1213, the second region 1212, and the first region 1211 are sequentially cleaned by the cleaning part 150. Specifically, with reference to FIG. 26 to FIG. 28, in some embodiments, a clockwise rotation direction of the first substrate 120 may be defined as a first circumferential direction. For a specific motion mode, for example, an initial state in which the first substrate 120 is located at the first position 122 is used as an example. With reference to FIG. 26, at this time, the first region 1211 can obtain the reaction solution from the liquid distribution part 140, the second region 1212 can transfer the reaction solution to the reaction surface 210, and the third region 1213 can be cleaned by the cleaning part 150. After the foregoing action is completed, with reference to FIG. 27, the first substrate 120 can rotate to the second position 123 in the first circumferential direction, and at this time, the first region 1211 can transfer the reaction solution to the reaction surface 210, the second region 1212 can be cleaned by the cleaning part 150, and the third region 1213 can obtain the reaction solution from the liquid distribution part 140. After the foregoing action is completed, with reference to FIG. 28, the first substrate 120 can rotate to the third position 124 in the first circumferential direction, and at this time, the first region 1211 can be cleaned by the cleaning part 150, the second region 1212 can obtain the reaction solution from the liquid distribution part 140, and the third region 1213 can transfer the reaction solution to the reaction surface 210. It may be understood that, in this embodiment, the first substrate 120 may sequentially have three regions and three positions relative to the fixing part 110 in the circumferential direction of the axis, and in a process in which the first substrate 120 rotates about the circumferential direction of the axis, any region can sequentially be located at different sections arranged in the circumferential direction, and different operations may be respectively performed on the sections. Based on the foregoing arrangement, when the liquid transfer device 100 has a plurality of operation positions, each operation position can be effectively utilized through the rotation of the first substrate 120. This is beneficial to improving the efficiency of the liquid transfer. In addition, not limited to the arrangements in the foregoing embodiments, in some embodiments, the liquid transfer device 100 may further include another operational part, and a total quantity of parts may correspond to a quantity of regions, such that different parts of the liquid transfer device 100 can be adapted to circulation between different positions.

With reference to FIG. 4 and FIG. 29 and FIG. 30, for an embodiment in which the first substrate 120 rotates about the circumferential direction of the axis, the second substrate 160 may be further configured. Specifically, with reference to FIG. 29 and FIG. 30, in an embodiment corresponding to a sixth motion mode, the first wall surface 121 may be planar and parallel to the reaction surface 210. The first driving part 130 may be configured to drive the first substrate 120 to rotate about an axis perpendicular to the first wall surface 121, to cause the first substrate 120 to perform position switching between the first position 122 and the second position 123. The axis passes through the first wall surface 121. It may be understood that the configuration of the first driving part 130 described above is similar to the configuration of the fourth motion mode described above, which functions to enable the first substrate 120 to achieve position switching through rotation.

Based on the foregoing configuration, with reference to FIG. 29 and FIG. 30, the liquid transfer device 100 may further include the second substrate 160. The second substrate 160 may include a second wall surface 161. The first driving part 130 may be configured to drive the second wall surface 161 to rotate about the axis, to cause the second substrate 160 to perform position switching between the fourth position 162 and the fifth position 163. It may be understood that the second substrate 160 has the configuration similar to that of the first substrate 120, and can similarly achieve the position switching by the first driving part 130 driving the second wall surface 161 to rotate. When the second substrate 160 is located at the fourth position 162, the second wall surface 161 is configured to obtain the reaction solution, and when the second substrate 160 is located at the fifth position 163, the second wall surface 161 transfers the reaction solution to the reaction surface 210. Similarly, to improve the stability of transferring the reaction solution, in some embodiments, Mohs hardness of the second substrate 160 may be greater than or equal to 5H.

For a structural form of the second wall surface 161, with reference to FIG. 29 and FIG. 30, in some embodiments, the second wall surface 161 may be annular, and the second wall surface 161 may be arranged surrounding an outside of the first wall surface 121, or the second wall surface 161 may be arranged surrounding an inner side of the first wall surface 121. According to different liquid guidance requirements, with reference to FIG. 31, in some embodiments, the second wall surface 161 may alternatively be semi-annular.

Based on the foregoing configuration, the fixing part 110 may be further driven to meet a liquid guidance requirement. Specifically, with reference to FIG. 29 and FIG. 30, in some embodiments, the liquid transfer device 100 may further include a third driving part 170. The third driving part 170 may be connected to the fixing part 110 and can drive the fixing part 110 to perform position switching between the sixth position 112 and the seventh position 113 in the direction perpendicular to the axis. When the fixing part 110 is located at the sixth position 112, the fixing structure 111 is spaced apart from and opposite to the first wall surface 121, and when the fixing part 110 is located at the seventh position 113, the fixing structure 111 is spaced apart from and opposite to the second wall surface 161. It may be understood that, when the fixing part 110 is located at the sixth position 112, the first wall surface 121 located at the second position 123 can direct the reaction solution to the reaction surface 210, and when the fixing part 110 is located at the seventh position 113, the second wall surface 161 located at the fifth position 163 can direct the reaction solution to the reaction surface 210.

For a specific motion mode in this embodiment, for example, with reference to FIG. 29, an initial state in which the first substrate 120 is located at the second position 123 is used as an example. At this time, the first substrate 120 can transfer the reaction solution to the reaction surface 210, and the second substrate 160 may be located at the fourth position 162, and can obtain the reaction solution from the liquid distribution part 140. When the first substrate 120 completes liquid guidance at the second position 123, with reference to FIG. 30, the first substrate 120 can rotate to the first position 122 in the first circumferential direction, and can obtain the reaction solution from the liquid distribution part 140. At this time, the second substrate 160 may rotate to the fifth position 163, and can transfer the reaction solution to the reaction surface 210. In a process in which the first substrate 120 and the second substrate 160 rotate in the circumferential direction of the axis, the third driving part 170 may correspondingly drive the fixing part 110 to move. For example, in a process in which the first substrate 120 rotates from the second position 123 to the first position 122 after completing the liquid guidance, and the second substrate 160 rotates to the fifth position 163, the third driving part 170 may simultaneously drive the fixing part 110 to move from the sixth position 112 to the seventh position 113. The foregoing arrangement, through joint cooperation of the independently rotatable first substrate 120, the independently rotatable second substrate 160, and the movable fixing part 110, enables the first substrate 120 and the second substrate 160 to simultaneously complete functional transition between liquid guidance and liquid aspiration during movement of the fixing part 110, such that there can always be one substrate that can obtain the reaction solution and one substrate that can direct the solution, and is beneficial to improving the efficiency of the liquid transfer.

According to different liquid guidance requirements, in the multiple embodiments corresponding to the six motion modes described above, other types of operations may be equivalently added or replaced for the liquid transfer device 100 in addition to the operations of obtaining the reaction solution and directing the reaction solution to the reaction surface 210. For example, in some embodiments, an operation of cleaning the reaction surface 210 may be further added (which may be understood as adding the arrangement part in the foregoing embodiment), and a corresponding adaptive configuration may be implemented. In some embodiments, different operations may correspond to different positions. In some other embodiments, two or more operations may be integrated to be performed at the same position. For example, the first substrate 120 may sequentially complete, at the first position 122, operations of cleaning the first wall surface 121 and obtaining the reaction solution.

It should be noted that the multiple embodiments corresponding to the six motion modes described above are merely examples of embodiments, and more embodiments may be derived by combining different embodiments. Details are not described herein again.

To achieve a better liquid transfer effect and make the first substrate 120 less prone to vibration in the process of transferring the reaction solution to the reaction surface 210, the structure of the first substrate 120 may be further limited. Specifically, in some embodiments, the first substrate 120 may be made of glass or ceramic. In this embodiment, using glass or ceramic as the material of the first substrate 120 may satisfy the Mohs hardness of greater than or equal to 5H, and has a good liquid transfer effect. Furthermore, using glass or ceramic as the material of the first substrate 120 can further prevent the first substrate 120 from interfering (for example, dissolving or adsorbing) a sample or the reaction solution. Alternatively, in some other embodiments, the first wall surface 121 may be subjected to plasma/corona treatment, to increase surface tension of the first wall surface 121. In this embodiment, increasing the surface tension of the first wall surface 121 can achieve a better liquid transfer effect. Alternatively, in some other embodiments, a distance between the first wall surface 121 located at the second position 123 and the reaction surface 210 is twice a thickness of the reaction solution. According to a liquid transfer principle of generating a shear force and directing the reaction solution to the reaction surface 210 within a specific gap range (satisfying the minimum condition for the reaction solution replacement ratio) through tangential relative motion between the sample carrier 200 and the substrate, in this embodiment, limiting the distance between the first wall surface 121 and the reaction surface 210 to be twice the thickness of the reaction solution may prevent drying of the sample carrier 200 or peripheral liquid leakage, and can achieve a better liquid transfer effect. It should be noted that, in addition to the first substrate 120, when the liquid transfer device 100 further includes another substrate, which is also used for liquid transfer, the foregoing limitation for the first substrate 120 may also be adaptively applied to the another substrate.

To achieve a better liquid transfer effect, the liquid transfer device 100 may be further limited. Specifically, in some embodiments, the liquid transfer device 100 may satisfy one of the following conditions (a) to (f):
(a) Flatness P of the first substrate 120 satisfies: 0 um≤P≤3 um.
(b) Both the first wall surface 121 and the reaction surface 210 are planar, the first wall surface 121 is parallel to the reaction surface 210, the first substrate 120 is capable of rotating about an axis perpendicular to the first wall surface 121, and an area of the first wall surface 121 is not less than twice an area of the reaction surface 210.
(c) After the first substrate 120 has transferred the reaction solution to the reaction surface 210 at the second position 123, the first substrate 120 moves in a third direction X2, in a direction parallel to the first wall surface 121, a cross section of the first substrate 120 has a first cross-sectional side edge 125 parallel to the third direction X2, and in the third direction X2, a length of the first cross-sectional side edge 125 is greater than twice a length of the reaction surface 210.
(d) After the first substrate 120 has transferred the reaction solution to the reaction surface 210 at the second position 123, the first substrate 120 moves in a third direction X2, in a direction parallel to the first wall surface 121, a cross section of the first substrate 120 has a second cross-sectional side edge 126 perpendicular to the third direction X2, and in a direction perpendicular to the third direction X2, a length of the second cross-sectional side edge 126 is greater than a length of the reaction surface 210.
(e) The liquid transfer device 100 further includes a liquid distribution part 140 and a cleaning part 150, where the liquid distribution part 140 is configured to distribute the reaction solution onto the first wall surface 121 when the first substrate 120 is located at the first position 122, and the cleaning part 150 is configured to clean the first wall surface 121 after the first substrate 120 has transferred the reaction solution to the reaction surface 210 at the second position 123.

The first driving part 130 is configured to drive the first substrate 120 to move in a first direction X1, and the cleaning part 150, the liquid distribution part 140, the first substrate 120, and the fixing part 110 are arranged spaced apart from and opposite to each other in the first direction X1;
and/or
the first driving part 130 is configured to drive the first substrate 120 to rotate about an axis perpendicular to the first wall surface 121, and the cleaning part 150, the liquid distribution part 140, and the fixing part 110 are distributed in a circumferential direction of the axis.
(f) The first driving part 130 is configured to drive the first substrate 120 to move in a first direction X1, the liquid transfer device 100 further includes a liquid distribution part 140, where the liquid distribution part 140 is configured to distribute the reaction solution onto the first wall surface 121 when the first substrate 120 is located at the first position 122, and a cleaning part 150 is configured to clean the first wall surface 121 after the first substrate 120 has transferred the reaction solution to the reaction surface 210 at the second position 123.

When the first substrate 120 is located at the first position 122, the first substrate 120 and the liquid distribution part 140 are arranged opposite to each other in the second direction Y perpendicular to the first direction X1, and when the first substrate 120 is located at the second position 123, the first substrate 120 and the fixing part 110 are arranged opposite to each other in the second direction Y.

The foregoing conditions are further explained below.

For the condition (a), in some embodiments, according to a principle in which the reaction solution is transferred by a shear force through relative motion between the first substrate 120 and the sample carrier 200, the flatness of the first substrate 120 is not greater than 3 um. This can prevent the first substrate 120 from scratching the sample carrier 200 or causing liquid leakage from the sample carrier 200, thereby achieving a better liquid transfer effect. Preferably, the flatness of the first substrate 120 may be further limited to be 2 um, to achieve a better liquid transfer effect.

For the condition (b), it may be understood that, based on the configuration in which the first substrate 120 can rotate about the axis, the first wall surface 121 and the reaction surface 210 may be arranged in parallel and opposite to each other. The configuration in which the area of the first wall surface 121 is not less than twice the area of the reaction surface 210 can facilitate liquid transfer from the first wall surface 121 to the reaction surface 210. **In** addition, a liquid guidance region, a liquid distribution region, a cleaning region, and the like can be provided, to achieve high liquid transfer efficiency.

For the conditions (c) and (d), with reference to FIG. 1 and FIG. 2, it may be understood that, in some embodiments, the first substrate 120 may be in the shape of a rectangular cuboid, where a long side (the first cross-sectional side edge 125) of the rectangular cuboid may be parallel to a direction in which the first substrate 120 moves to the second position 123, and a short side (the second cross-sectional side edge 126) of the rectangular cuboid may be perpendicular to the direction in which the first substrate 120 moves to the second position 123.

Based on the foregoing configuration, in some embodiments, in the third direction X2, the length of the first cross-sectional side edge 125 is greater than twice the length of the reaction surface 210. In this way, when the first substrate 120 moves in the third direction X2, the reaction solution on the first wall surface 121 can be sufficiently transferred to the reaction surface 210 by a shear force. This is beneficial to improving the efficiency of the liquid transfer. In some other embodiments, in the direction perpendicular to the third direction X2, the length of the second cross-sectional side edge 126 is greater than the length of the reaction surface 210. This can ensure that all the reaction solution on the first wall surface 121 can be transferred to the reaction surface 210, and prevent uneven liquid transfer. In this embodiment, both the length of the second cross-sectional side edge 126 and the length of the reaction surface 210 may be understood as dimensions in a width direction corresponding to the first cross-sectional side edge 125 described above.

For the condition (e), in the embodiment corresponding to this condition, for arrangement of the liquid distribution part 140 and the cleaning part 150, reference may be made to the related descriptions of the foregoing embodiments. Specifically, with reference to FIG. 9 or FIG. 10, in some embodiments, the first substrate 120 may move in parallel, and the movement direction of the first substrate 120 may be the same as the relative arrangement direction of the cleaning part 150, the liquid distribution part 140, the first substrate 120, and the fixing part 110. With reference to FIG. 26 to FIG. 28, in some other embodiments, the first substrate 120 may rotate about the axis, and the cleaning part 150, the liquid distribution part 140, and the fixing part 110 may be distributed correspondingly in the circumferential direction of the axis. Through the arrangements in the foregoing two aspects, each operational region of the liquid transfer device 100 can coordinate with the movement direction of the first substrate 120, thereby achieving high liquid transfer efficiency.

For the condition (f), in the embodiment corresponding to this condition, for arrangement of the liquid distribution part 140 and the cleaning part 150, reference may be made to the related descriptions of the foregoing embodiments. It may be understood that, with reference to FIG. 6 and FIG. 8, the first substrate 120 can move in the first direction X1, and both the liquid distribution part 140 and the fixing part 110 are arranged relative to the first substrate 120 in the second direction Y perpendicular to the first direction X1. The foregoing arrangement enables the liquid transfer device 100 to conveniently complete an operation such as liquid distribution or liquid guidance while moving the first substrate 120, without mutual interference.

It may be understood that, in the liquid transfer device 100 provided in the embodiment of the first aspect described above, the first driving part 130 may drive the first substrate 120 to perform position switching between the first position 122 and the second position 123, and the fixing part 110 may remain stationary. Based on the foregoing solution, a corresponding configuration of another aspect may alternatively be implemented.

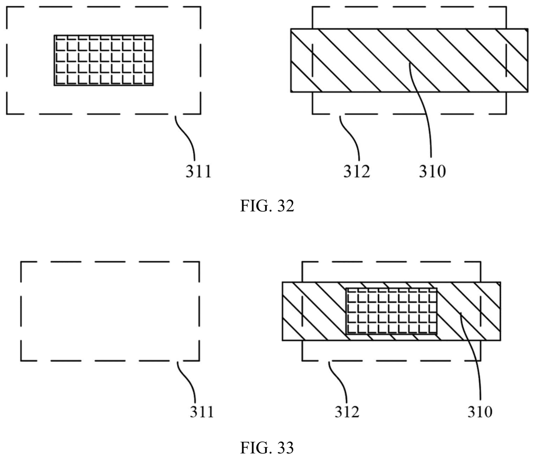

Specifically, with reference to FIG. 32 and FIG. 33, an embodiment of a second aspect of the present disclosure further provides a liquid transfer device 300, configured to direct a reaction solution to a reaction surface of a sample carrier. Similarly, the liquid transfer device 300 includes a fixing part, a first substrate 310, and a first driving part.

The specific structure of the liquid transfer device 300 is described below. The fixing part includes a fixing structure. The fixing structure is configured to fix the sample carrier. The fixing part has a first position 311 and a second position 312 that are relative to the fixing part 110. The first substrate 310 includes a first wall surface. When the fixing part is located at the first position 311, the first wall surface is configured to obtain the reaction solution. When the fixing part is located at the second position 312, the first wall surface is configured to direct the reaction solution to the reaction surface. The first driving part is configured to drive the fixing part to perform position switching between the first position 311 and the second position 312.

Similarly, to improve stability of transferring the reaction solution, Mohs hardness of the first substrate 310 is greater than or equal to 5H.

It may be understood that the liquid transfer device 300 in the embodiment of the second aspect is similar to that in the embodiment of the first aspect described above, and a difference lies in that, in this embodiment, the first driving part may drive the fixing part to perform position switching between the first position and the second position, and the first substrate 310 may remain stationary. Therefore, in the embodiment of the second aspect, the liquid transfer device 300 may have effects similar to those of the liquid transfer device 100 described above.

Further, based on the foregoing difference, various embodiments related to the embodiment of the first aspect may be combined and applied to the liquid transfer device 300 in the embodiment of the second aspect to have similar effects. Details are not described herein again.

Correspondingly, an embodiment of a third aspect of the present disclosure further provides a reaction device, including the liquid transfer device 100 (or the liquid transfer device 300) and the sample carrier in any one of the foregoing embodiments. In some embodiments, the reaction device may be adapted to facilitate reaction of a reaction solution with a reaction surface on the sample carrier.

Correspondingly, an embodiment of a fourth aspect of the present disclosure further provides an analysis device, including the reaction device described above. In some embodiments, the analysis device may be adapted to analyze a reaction surface after reaction with a reaction solution, and provide a corresponding analysis result.

Benefiting from improvement of the liquid transfer device 100 and the liquid transfer device 300, the reaction device in the embodiment of the third aspect of the present disclosure and the analysis device in the embodiment of the fourth aspect of the present disclosure exhibit the same technical effects as those of the liquid transfer device 100 and the liquid transfer device 300 in the foregoing embodiments. Details are not described herein again.

The foregoing descriptions are merely preferred embodiments of the present disclosure, and do not limit the patent scope of the present disclosure. Under the inventive concept of the present disclosure, any equivalent structural transformation made using the content of the specification and accompanying drawings of the present disclosure, or direct/indirect applications in other related technical fields shall fall within the protection scope of the patent of the present disclosure.

## Claims

1. A liquid transfer device, configured to direct a reaction solution to a reaction surface of a sample carrier, wherein the liquid transfer device comprises:
a fixing part, comprising a fixing structure, wherein the fixing structure is configured to fix the sample carrier;
a first substrate, comprising a first wall surface, wherein the first substrate has a first position and a second position that are relative to the fixing structure, the first wall surface is configured to obtain the reaction solution when the first substrate is located at the first position, and the first wall surface is configured to direct the reaction solution to the reaction surface when the first substrate is located at the second position; and
a first driving part, configured to drive the first substrate to perform position switching between the first position and the second position,
wherein Mohs hardness of the first substrate is greater than or equal to 5H.

2. The liquid transfer device of claim 1, wherein:
the first wall surface is planar and parallel to the reaction surface, and the first driving part is configured to drive the first substrate to translate in a direction parallel to the first wall surface, to cause the first substrate to perform position switching between the first position and the second position; or
the first wall surface is planar and parallel to the reaction surface, and the first driving part is configured to drive the first substrate to rotate about an axis perpendicular to the first wall surface, to cause the first substrate to perform position switching between the first position and the second position; or
the first wall surface is a cylindrical surface, a central axis of the cylindrical surface is parallel to the reaction surface, and the first driving part is configured to drive the first substrate to rotate about the central axis, to cause the first substrate to perform position switching between the first position and the second position.

3. The liquid transfer device of claim 1, wherein:
the liquid transfer device further comprises a liquid distribution part and a cleaning part, the liquid distribution part is configured to distribute the reaction solution onto the first wall surface when the first substrate is located at the first position, and the cleaning part is configured to clean the first wall surface after the first substrate has transferred the reaction solution to the reaction surface at the second position and moved to the first position; or
the first substrate further has a third position relative to the fixing structure, the first driving part is configured to drive the first substrate to switch between the second position and the third position, the liquid transfer device comprises a liquid distribution part and a cleaning part, the liquid distribution part is configured to distribute the reaction solution onto the first wall surface when the first substrate is located at the first position, and the cleaning part is configured to clean the first wall surface when the first substrate is located at the third position.

4. The liquid transfer device of claim 1, wherein:
the liquid transfer device further comprises a second substrate, the second substrate comprises a second wall surface, the second substrate has a fourth position and a fifth position that are relative to the fixing structure, the second wall surface is configured to obtain the reaction solution when the second substrate is located at the fourth position, and the second wall surface is configured to direct the reaction solution to the reaction surface when the second substrate is located at the fifth position, wherein Mohs hardness of the second substrate is greater than or equal to 5H; and
the first driving part is configured to drive the second substrate to perform position switching between the fourth position and the fifth position; or the liquid transfer device further comprises a second driving part, wherein the second driving part is configured to drive the second substrate to perform position switching between the fourth position and the fifth position.

5. The liquid transfer device of claim 4, wherein:
the first driving part is configured to simultaneously drive the first substrate to the first position and drive the second substrate to the fifth position at which the second substrate is spaced apart from and opposite to the fixing structure, and simultaneously drive the first substrate to the second position at which the first substrate is spaced apart from and opposite to the fixing structure and drive the second substrate to the fourth position; or
the first driving part is configured to simultaneously drive the first substrate to the first position and drive the second substrate to the fourth position, and simultaneously drive the first substrate to the second position and drive the second substrate to the fifth position; and the liquid transfer device further comprises a third driving part, wherein the third driving part is connected to the fixing part, the third driving part drives the fixing part to perform position switching between a sixth position where the fixing structure is arranged spaced apart from and opposite to the first wall surface of the first substrate located at the second position, and a seventh position where the fixing structure is arranged spaced apart from and opposite to the second wall surface of the second substrate located at the fifth position.

6. The liquid transfer device of claim 4, wherein:
the first substrate is arranged spaced apart from and opposite to the second substrate in a first direction, and the first driving part is configured to drive the first substrate and the second substrate to reciprocate in the first direction, such that the first driving part simultaneously drives the first substrate to the first position and drives the second substrate to the fifth position at which the second substrate is spaced apart from and opposite to the fixing structure, and simultaneously drives the first substrate to the second position at which the first substrate is spaced apart from and opposite to the fixing structure and drives the second substrate to the fourth position; or
the first substrate is spaced apart from and opposite to the second substrate in a second direction, and the first driving part is configured to drive the first substrate and the second substrate to reciprocate in a first direction perpendicular to the second direction, such that the first driving part simultaneously drives the first substrate to the first position and drives the second substrate to the fourth position, and simultaneously drives the first substrate to the second position and drives the second substrate to the fifth position; and the liquid transfer device further comprises a third driving part, wherein the third driving part is connected to the fixing part and drives the fixing part to perform position switching between a sixth position where the fixing structure is arranged spaced apart from and opposite to the first wall surface of the first substrate located at the second position, and a seventh position where the fixing structure is arranged spaced apart from and opposite to the second wall surface of the second substrate located at the fifth position.

7. The liquid transfer device of claim 1, wherein:
the first wall surface is planar and parallel to the reaction surface, and the first driving part is configured to drive the first substrate to rotate about an axis perpendicular to the first wall surface, to cause the first substrate to perform position switching between the first position and the second position; and the axis passes through the first wall surface; and
the first wall surface comprises a first region and a second region, the first region and the second region are distributed in a circumferential direction of the axis, the first region is configured to obtain the reaction solution when the first substrate is located at the first position, and the first region is configured to transfer the obtained reaction solution to the reaction surface when the first substrate is located at the second position.

8. The liquid transfer device of claim 7, wherein:
the first wall surface further comprises a third region, and the first region, the second region, and the third region are sequentially arranged in a rotation direction of the first substrate;
the first substrate further comprises a third position, and in the rotation direction of the first substrate, the first driving part drives the first substrate to perform cyclic rotation in a sequence of rotating from the first position to the second position, rotating from the second position to the third position, and rotating from the third position to the first position; and
the liquid transfer device comprises a liquid distribution part and a cleaning part; and in a process in which the first substrate is sequentially located at the first position, the second position, and the third position, the first region, the third region, and the second region sequentially obtain the reaction solution from the liquid distribution part, the second region, the first region, and the third region sequentially transfer the reaction solution to the reaction surface, and the third region, the second region, and the first region are sequentially cleaned by the cleaning part.

9. The liquid transfer device of claim 1, wherein:
the first wall surface is planar and parallel to the reaction surface, and the first driving part is configured to drive the first substrate to rotate about an axis perpendicular to the first wall surface, to cause the first substrate to perform position switching between the first position and the second position; and the axis passes through the first wall surface;
the liquid transfer device further comprises a second substrate, the second substrate comprises a second wall surface, the second wall surface is annular and arranged surrounding an outer side of the first wall surface, the first driving part is configured to drive the second wall surface to rotate about the axis, to cause the second substrate to perform position switching between a fourth position and a fifth position, the second wall surface is configured to obtain the reaction solution when the second substrate is located at the fourth position, and the second wall surface transfers the reaction solution to the reaction surface when the second substrate is located at the fifth position, wherein Mohs hardness of the second substrate is greater than or equal to 5H; and
the liquid transfer device further comprises a third driving part, wherein the third driving part is connected to the fixing part and capable of driving the fixing part to perform position switching between a sixth position and a seventh position in a direction perpendicular to the axis, the fixing structure is spaced apart from and opposite to the first wall surface when the fixing part is located at the sixth position, and the fixing structure is spaced apart from and opposite to the second wall surface when the fixing part is located at the seventh position.

10. The liquid transfer device of claim 1, wherein:
the first substrate is made of glass or ceramic; or
the first wall surface is subjected to plasma/corona treatment, to increase surface tension of the first wall surface; or
a distance between the first wall surface located at the second position and the reaction surface is twice a thickness of the reaction solution.

11. The liquid transfer device of claim 1, wherein:
the liquid transfer device satisfies one of the following conditions (a) to (f):
(a) flatness P of the first substrate satisfies: 0 um≤P≤3 um;
(b) both the first wall surface and the reaction surface are planar, the first wall surface is parallel to the reaction surface, the first substrate is capable of rotating about an axis perpendicular to the first wall surface, and an area of the first wall surface is not less than twice an area of the reaction surface;
(c) the first driving part drives the first substrate to move to the second position in a third direction, in a direction parallel to the first wall surface, a cross section of the first substrate has a first cross-sectional side edge parallel to the third direction, and in the third direction, a length of the first cross-sectional side edge is greater than twice a length of the reaction surface;
(d) the first driving part drives the first substrate to move to the second position in a third direction, in a direction parallel to the first wall surface, a cross section of the first substrate has a second cross-sectional side edge perpendicular to the third direction, and in a direction perpendicular to the third direction, a length of the second cross-sectional side edge is greater than a length of the reaction surface;
(e) the liquid transfer device further comprises a liquid distribution part and a cleaning part, wherein the liquid distribution part is configured to distribute the reaction solution onto the first wall surface when the first substrate is located at the first position, and the cleaning part is configured to clean the first wall surface after the first substrate has transferred the reaction solution to the reaction surface at the second position, wherein
the first driving part is configured to drive the first substrate to move in a first direction, and the cleaning part, the liquid distribution part, the first substrate, and the fixing part are arranged spaced apart from and opposite to each other in the first direction,
and/or
the first driving part is configured to drive the first substrate to rotate about an axis perpendicular to the first wall surface, and the cleaning part, the liquid distribution part, and the fixing part are distributed in a circumferential direction of the axis; or
(f) the first driving part is configured to drive the first substrate to move in a first direction, the liquid transfer device further comprises a liquid distribution part, wherein the liquid distribution part is configured to distribute the reaction solution onto the first wall surface when the first substrate is located at the first position, and a cleaning part is configured to clean the first wall surface after the first substrate has transferred the reaction solution to the reaction surface at the second position;
when the first substrate is located at the first position, the first substrate and the liquid distribution part are arranged opposite to each other in a second direction perpendicular to the first direction, and when the first substrate is located at the second position, the first substrate and the fixing part are arranged opposite to each other in the second direction.

12. A liquid transfer device, configured to direct a reaction solution to a reaction surface of a sample carrier, wherein the liquid transfer device comprises:
a fixing part, comprising a fixing structure, wherein the fixing structure is configured to fix the sample carrier, and the fixing part has a first position and a second position that are relative to the fixing structure;
a first substrate, comprising a first wall surface, wherein the first wall surface is configured to obtain the reaction solution when the fixing part is located at the first position, and the first wall surface is configured to direct the reaction solution to the reaction surface when the fixing part is located at the second position; and
a first driving part, configured to drive the fixing part to perform position switching between the first position and the second position,
wherein Mohs hardness of the first substrate is greater than or equal to 5H.

13. A reaction device, comprising the liquid transfer device of any one of claims 1 to 12 and the sample carrier.

14. An analysis device, comprising:
the reaction device of claim 13; and
a detection device.
